# DEMANDE DE BREVET EUROPEEN

(11) **EP 0 762 172 A1**
(43) Date de publication de la demande: **12.03.1997**
(21) Numéro de dépôt: 96401771.9
(22) Date de dépôt: 12.08.1996
(51) Int. Cl.: G02B 6/44

(54) **Limiteur de courbure pour cassettes de distribution de câbles optiques**

(30) Priorité: 17.08.1995 FR 9509876
(71) Demandeur: Société pour la valorisation de la fibre optique, 22730 Tregastel (FR); CABLES PIRELLI, F-94417 Saint Maurice Cédex (FR)
(72) Inventeur: Le Toulouzan, Yvon, 22730 Tregastel (FR); Le Moal, Olivier, 22300 Lannion (FR)
(74) Mandataire: Lepeudry-Gautherat, Thérèse (FR)

(57) **Abrégé**

Sur la zone de groupage (8) des câbles (15) sur la cassette (1), est placée une languette (17) en élastomère dont une partie libre déborde sur la plage de sortie (18) de la zone de groupage, languette servant de point d'appui déformable aux câbles lors du pivotement de la cassette.

Application aux sous-répartiteurs optiques et aux boîtiers de diffusion optique.

## Description

L'invention concerne les cassettes de distribution de câbles optiques utilisables notamment dans les sous-répartiteurs et les boîtiers de diffusion optique, et porte plus précisément sur un limiteur de courbure pour lesdits câbles.

Lorqu'il s'agit de raccorder un ensemble de câbles optiques de transport à de multiples câbles de distribution desservant une pluralité de clients, il est avantageux de regrouper les connexions dans un même boîtier accessible à l'installateur. Il est habituel alors d'utiliser des cassettes d'épissurage ou de distribution qui se présentent comme des réceptacles plats, dans lesquelles débouchent des câbles d'arrivée et d'où partent des câbles de départ. Dans chacune des cassettes sont regroupées les épissures de raccordement ou les coupleurs de fibres optiques. En outre, chaque cassette est apte à recevoir une réserve de câbles ou de fibres formant des boucles sensiblement concentriques autour d'un plot de guidage.

Ces cassettes sont habituellement montées de façon pivotante dans des boîtiers ou des sous-répartiteurs. Un sous-répartiteur doit notamment disposer d'entrées et de sorties adaptées aux câbles du réseau d'infrastructure, ainsi que de sorties adaptées aux câbles de branchement. Ces dispositifs d'entrée/sortie doivent permettre de placer ou de remplacer un ou plusieurs câbles sans perturber les câbles et fibres déjà en place. Il est nécessaire également de disposer dans le sous-répartiteur d'un stock suffisant de fibres permettant une nouvelle intervention par exemple en cas de rupture de fibres. Le sous-répartiteur doit aussi permettre un brassage simple par un seul connecteur ou un brassage dit "par jarretière" par deux connecteurs. En outre, d'une manière générale, la connectique démontable doit être accessible et placée de façon distincte de l'épissurage protégé et repéré. Des coupleurs doivent enfin être accueillis dans le sous-répartiteur et rester facilement accessible pour être changés.

Hormis ces principales dispositions et d'autres non mentionnées, l'ensemble doit être aussi compact que possible pour une capacité importante de raccordements.

La manoeuvre répétée de pivotement des cassettes dans le sous-répartiteur ne doit pas entraîner un pliage trop prononcé des câbles de transport renfermant une pluralité de fibres optiques qui ne peuvent dépasser une courbure bien déterminée. Pour éviter cela il existe des tubes reliant les dispositifs d'épanouissement de câbles aux cassettes mobiles, tubes qui suivent le mouvement de rotation des cassettes en contrôlant le rayon de courbure des fibres . Mais ces tubes sont coûteux et de mise en place difficile aussi l'invention propose-t-elle une solution simple et efficace à ce problème, grâce à un limiteur de courbure peu coûteux et facile de mise en oeuvre.

L'invention a donc pour objet un limiteur de courbure pour cassettes de distribution de câbles optiques, utilisable dans des sous-répartiteurs et des boîtiers de diffusion optique, lesdites cassettes étant pourvues d'un axe de pivotement et, au voisinage de celui-ci, d'une zone de groupage des câbles d'entrée, limiteur selon lequel, sur ladite zone de groupage des câbles sur la cassette, est placée une languette en élastomère dont une partie libre déborde sur la plage de sortie de la zone de groupage, languette servant de point d'appui déformable aux câbles lors du pivotement de la cassette.

Avantageusement, la languette est pincée dans une alvéole profilée ménagée entre un déflecteur vertical et l'orifice prévu pour le passage de l'axe de pivotement.

Les caractéristiques particulières et avantages de l'invention ressortiront de la description suivante d'un exemple non limitatif de réalisation dans lequel il est fait référence aux dessins annexés qui représentent :

Figure 1 : une vue en plan d'une cassette.

Figure 2 : une vue partielle en plan de la cassette après pivotement.

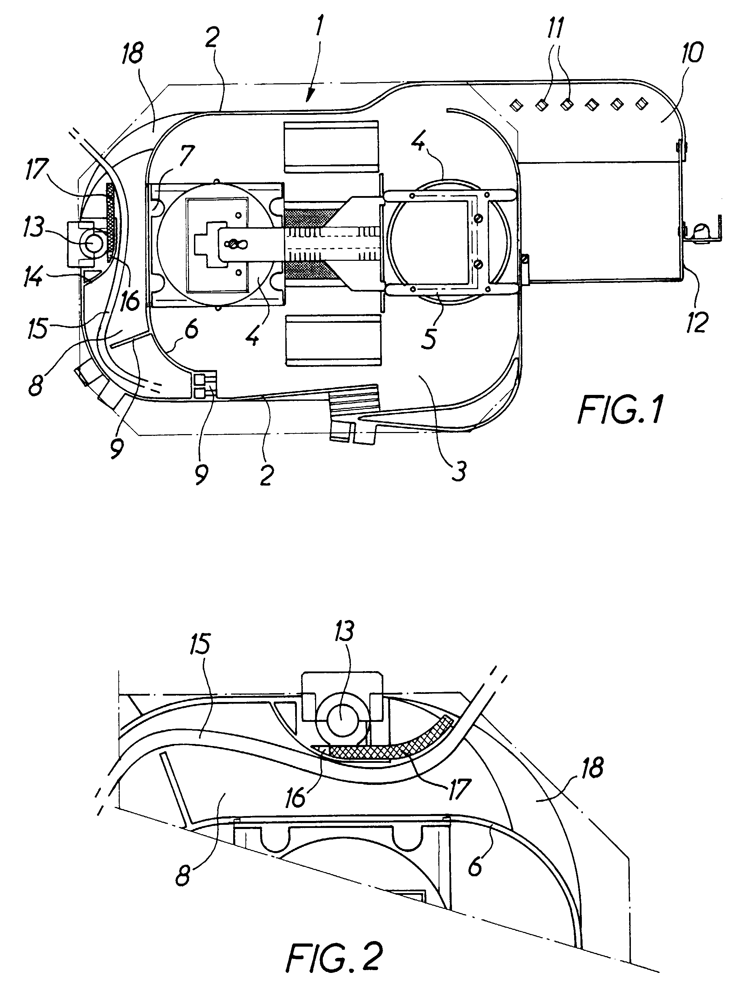

La cassette 1 représentée à la figure 1 est un réceptacle de forme sensiblement rectangulaire limité par une bordure 2, sur le fond 3 duquel sont rapportés des plots 4 de guidage de câbles ou fibres optiques. Une pièce 5 en forme de H sert à bloquer les câbles autour d'un plot tandis que l'autre est pourvu d'ergots 7 de maintien des fibres optiques. A une de ses extrémités, la cassette 1 porte une platine 10 qui sert de répartiteur de sortie pour les câbles ou fibres optiques et est équipée à cet effet d'étriers de guidage 11 et de connecteurs de brassage non représentés rapportés sur le bandeau 12. A l'extrémité opposée, une zone 8 de groupage des câbles optiques d'entrée est ménagée entre la bordure extérieure 2 et une bordure intermédiaire arrondie 6 de la cassette 1. Des barrettes 9 de guidage et de maintien desdits câbles sont aussi prévues dans cette zone. Au voisinage de cette dernière la cassette est pourvue d'un orifice 13 grâce auquel elle peut s'engager sur un axe vertical de pivotement.

L'orifice 13 est entouré d'un déflecteur vertical 14 formant un arrondi sur lequel peut s'appliquer le câble 15. Entre le déflecteur 14 et l'orifice est ménagée une petite alvéole profilée 16 à l'intérieur de laquelle se positionne une languette 17 en élastomère dont une partie libre dépasse de l'alvéole et déborde sur la plage de sortie 18 de la zone 8. On remarque que cette plage 18, entre l'orifice 13 et l'amorce de la bordure intermédiaire 6, ne dispose pas d'une bordure extérieure. Ladite languette sert de point d'appui déformable aux câbles lors du pivotement de la cassette 1.

En effet, quand celle-ci pivote autour de son axe, une certaine tension s'exerce sur le câble 15 qui tend à accentuer sa courbure notamment du côté où il est rattaché à un dispositif d'épanouissement fixe. On voit à la figure 2 que le câble s'appuie sur la languette 17 et que sa tension provoque un fléchissement de ladite languette ce qui évite au câble de prendre une courbure trop accentuée et de surplus, amortit les contraintes qu'il subit à ce niveau. Le câble glisse aussi sans difficultés sur la plage de sortie 18.

La languette 17 en élastomère a une souplesse limitée pour résister à la tension du câble et le maintenir avec la courbure requise, quel que soit le pivotement de la cassette. Elle se positionne très facilement dans l'alvéole 16 au fond de laquelle elle se trouve pincée, et donc maintenue sans qu'il soit nécessaire de la coller ou la fixer d'une autre manière. On peut donc aisèment la remplacer pour disposer dans l'alvéole une languette appropriée au nombre et à la nature des câbles sortant de la cassette.

## Revendications

1. Limiteur de courbure pour cassettes de distribution de câbles optiques utilisable dans des sous-répartiteurs et des boîtiers de diffusion optique, lesdites cassettes étant pourvues d'un axe de pivotement et, au voisinage de celui-ci, d'une zone de groupage des câbles d'entrée caractérisé en ce que sur ladite zone de groupage (8) des câbles (15) sur la cassette (1), est placée une languette (17) en élastomère dont une partie libre déborde sur la plage de sortie (18) de la zone de groupage, languette servant de point d'appui déformable aux câbles lors du pivotement de la cassette.

2. Limiteur de courbure selon la revendication 1, caractérisé en ce que la languette (17) est pincée dans une alvéole profilée (16) ménagée entre un déflecteur vertical (14) et l'orifice (13) prévu dans le passage de l'axe de pivotement.
